# EUROPEAN PATENT APPLICATION

(11) **EP 2 941 028 A1**
(43) Date of publication of application: **04.11.2015**
(21) Application number: 14166339.3
(22) Date of filing: 29.04.2014
(51) Int. Cl.: H04W 8/00

(54) **Device selection**

(71) Applicant: Nokia Technologies OY, 02610 Espoo (FI)
(72) Inventor: Reunamäki, Jukka, 33820 Tampere (FI); Palin, Arto, 37830 Viiala (FI)
(74) Representative: Berggren Oy Ab

(57) **Abstract**

A technique for wireless communication is provided. According to an example embodiment, the technique comprises scanning, in a first wireless communication apparatus, a wireless communication channel for messages associated with a first predetermined service type. The technique further comprises, in response to detecting one or more messages associated with the predetermined service type, deriving, for each source of one or more such messages, a quality indication descriptive of the strength of a radio connection between the first wireless communication apparatus and the respective source and selecting at most one of said sources as a target device on basis of said quality indications. The technique further comprises transmitting, in response to selecting the target device, via said wireless communication channel, one or more messages identifying the first wireless communication apparatus to represent a second predetermined service type and comprising a first selection indication including an identification of and the quality indication derived for the target device to identify the target device for other wireless apparatuses representing the second predetermined service type.

## Description

### TECHNICAL FIELD

The example and non-limiting embodiments of the present invention relate to device discovery and device selection for a short-range wireless communication.

### BACKGROUND

Establishing a short-range wireless connection between two devices, including e.g. steps of device discovery, device selection and connection setup is in many occasions a complicated operation. Multitude of different communication techniques, communication protocols and user-interface components for controlling use of these techniques/protocols may make it uncomfortable or even difficult for a user of a device to successfully perform the steps required for establishing a connection.

Therefore, partially or even completely automated procedures for establishing a short-range wireless connection between two devices can be considered to provide an improved user-experience. However, especially in an environment where a plurality of devices is present, correctly selecting the device to which the connection is to be established using an automated or partially automated connection establishment procedure is a non-trivial task.

### SUMMARY

According to an example embodiment, a wireless communication apparatus is provided, the apparatus comprising at least one processor and at least one memory including computer program code for one or more programs, the at least one memory and the computer program code configured to, with the at least one processor, cause the wireless communication apparatus at least to scan a wireless communication channel for messages associated with a first predetermined service type. The wireless communication apparatus is caused, in response to detecting one or more messages associated with the first predetermined service type, to derive, for each source of one or more such messages, a quality indication descriptive of the strength of a radio connection between the wireless communication apparatus and the respective source and to select at most one of said sources as a target device on basis of said quality indications. The wireless communication apparatus is further caused to transmit, in response to selecting the target device, via said wireless communication channel, one or more messages identifying the wireless communication apparatus to represent a second predetermined service type and comprising a first selection indication including an identification of and the quality indication derived for the target device to identify the target device for other wireless apparatuses representing the second predetermined service type.

According to another example embodiment, a method is provided, the method comprising scanning, in a first wireless communication apparatus, a wireless communication channel for messages associated with a first predetermined service type. The method further comprises, in response to detecting one or more messages associated with the first predetermined service type, deriving, for each source of one or more such messages, a quality indication descriptive of the strength of a radio connection between the first wireless communication apparatus and the respective source and selecting at most one of said sources as a target device on basis of said quality indications. The method further comprises transmitting, in response to selecting the target device, via said wireless communication channel, one or more messages identifying the first wireless communication apparatus to represent a second predetermined service type and comprising a first selection indication including an identification of and the quality indication derived for the target device to identify the target device for other wireless apparatuses representing the second predetermined service type.

According to another example embodiment, a computer program is provided, the computer program including computer readable program code configured to cause performing the following when said program is run on a computing apparatus: scan, in a first wireless communication apparatus, a wireless communication channel for messages associated with a first predetermined service type; in response to detecting one or more messages associated with the first predetermined service type, derive, for each source of one or more such messages, a quality indication descriptive of the strength of a radio connection between the first wireless communication apparatus and the respective source and select at most one of sources as a target device on basis of said quality indications; and transmit, in response to selecting the target device, via said wireless communication channel, one or more messages identifying the first wireless communication apparatus to represent a second predetermined service type and comprising a first selection indication including an identification of and the quality indication derived for the target device to identify the target device for other wireless apparatuses representing the second predetermined service type.

The computer program referred to above may be embodied on a volatile or a nonvolatile computer-readable record medium, for example as a computer program product comprising at least one computer readable non-transitory medium having program code stored thereon, the program which when executed by an apparatus cause the apparatus at least to perform the operations described hereinbefore for the computer program according to an example embodiment of the invention.

According to another example embodiment, a computer program product is provided, the computer program product comprising at least one computer readable non-transitory medium having program code stored thereon, the program code, when executed by a first wireless communication apparatus, causing the first wireless communication apparatus at least to scan a wireless communication channel for messages associated with a first predetermined service type. The first wireless communication apparatus is further caused, in response to detecting one or more messages associated with the first predetermined service type, to derive, for each source of one or more such messages, a quality indication descriptive of the strength of a radio connection between the first wireless communication apparatus and the respective source and select at most one of sources as a target device on basis of said quality indications. The first wireless communication apparatus is further caused to transmit, in response to selecting the target device, via said wireless communication channel, one or more messages identifying the first wireless communication apparatus to represent a second predetermined service type and comprising a first selection indication including an identification of and the quality indication derived for the target device to identify the target device for other wireless apparatuses representing the second predetermined service type.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features. The features described hereinafter are mutually freely combinable unless explicitly stated otherwise.

Some features of the invention are set forth in the appended claims. Aspects of the invention, however, both as to its construction and its method of operation, together with additional objects and advantages thereof, will be best understood from the following description of some example embodiments when read in connection with the accompanying drawings.

### BRIEF DESCRIPTION OF FIGURES

The embodiments of the invention are illustrated by way of example, and not by way of limitation, in the figures of the accompanying drawings.
Figure 1 schematically illustrates some components of a wireless communication arrangement.
Figure 2a schematically illustrates some components of a device according to an example embodiment.
Figure 2b schematically illustrates some components of a device according to an example embodiment.
Figure 3 illustrates example structure applied for advertising messages and scan response messages in the Bluetooth low energy (BLE) protocol.
Figure 4 illustrates an advertising packet according to an example embodiment.
Figure 5 illustrates a method according to an example embodiment.
Figure 6 illustrates a method according to an example embodiment.

### DESCRIPTION OF SOME EMBODIMENTS

When considering a first device applying an automated or partially automated (also referred to as semi-automated) technique or procedure for selecting another device in the vicinity for establishing a wireless connection with the selected device, an intuitive approach comprises the first device selecting another device that is closest to the first device.

As an example in this regard, so-called touch-to-select (T2S) technique has been developed to facilitate a user-friendly approach for establishing the wireless connection between two devices. In the T2S technique, a first device (a touching device) is brought to a close proximity of a second device (a touched device), and, consequently, an automatic device discovery, device selection and connection setup between the touching device and the touched device follows. The T2S technique involves applying, in the touching device, a measure indicative of the strength of a signal originating from the touched device as an indication of the touched device being within a range that is considered suitable for establishing a wireless connection between the touching and touched devices.

In the T2S technique, the device discovery, i.e. the touching device discovering the presence of the touched device, is based on the touched device (or, typically, a touchable device, to be precise) transmitting one or more messages (e.g. advertising packets) according to employed communication protocol for reception by the touching device. The touching device is hence able to detect the presence of the touchable device and to identify the touchable device on basis of information received in the message(s).

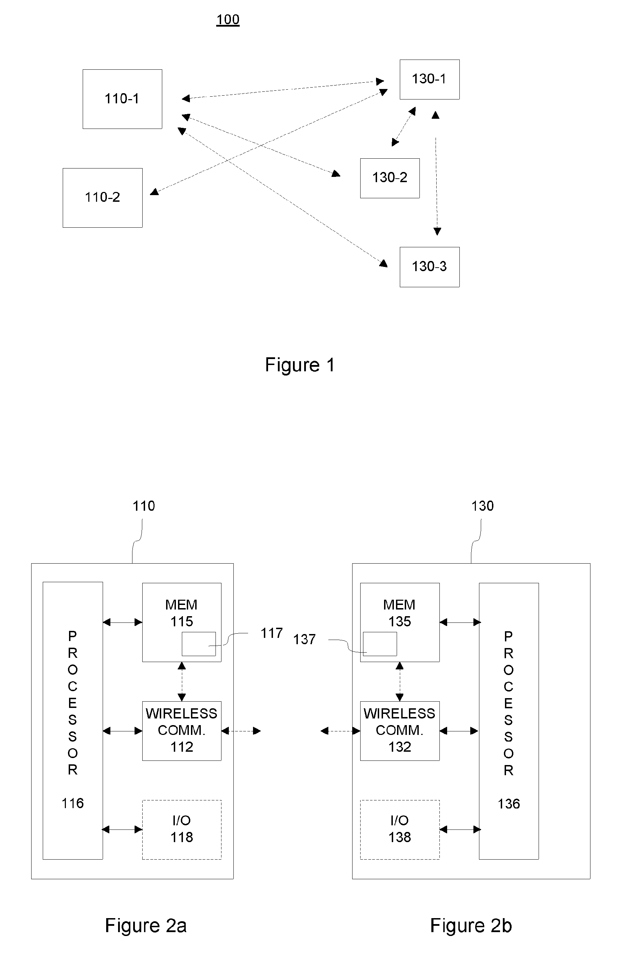

Figure 1 schematically illustrates some components or entities of a wireless communication arrangement 100 to depict an exemplifying framework for various embodiments of the present invention. The communication arrangement 100 may be considered to represent a use case where an automated or semi-automated connection establishment technique is applied, e.g. in context of the T2S technique outlined hereinbefore or by using another automated or semi-automated technique for device selection. The communication arrangement 100 comprises one or more first devices 110 and one or more second devices 130. In Figure 1, the communication arrangement 100 is depicted with first devices 110-1 and 110-2 and with second devices 130-1, 130-2 and 130-3.

The first device 110 may also be referred to as a first apparatus 110, whereas the second device 130 may also be referred to as a second apparatus 130.

In general, the first devices 110 are able to receive wireless transmissions transmitted (e.g. broadcast) by any of the second devices 130, and the second devices 130 are able to receive wireless transmissions transmitted (e.g. broadcast) by any of the first devices 110 and by any of the (other) second devices 130. This is illustrated by the dashed arrows in Figure 1 in viewpoint of the first device 110-1 and the second device 130-1.

In the following, the term first device 110, when used in the singular form, is applied to jointly refer to any of the one or more first devices 110 (e.g. to the first device 110-1 or 110-2) unless explicitly stated otherwise. Similarly, the term second device 130, when used in the singular form, is applied to jointly refer to any of the one or more second devices 130 (e.g. to the second device 130-1, 130-2 or 130-3 unless explicitly stated otherwise.

The first device 110 is typically, but not necessarily, a mobile device. Figure 2a schematically illustrates some components of an exemplifying first device 110. The first device 110 comprises a wireless communication portion 112 for communicating with other devices using a short-range wireless communication technique or protocol that enables a point-to-point wireless connection with another device. The first device 110 is hence capable of communicating with other devices equipped with means for wireless communication using the same technique/protocol. The wireless communication portion 112 may be considered as a wireless communication apparatus included in (or hosted by) the first device 110 (or the first apparatus 110).

The first device 110 further comprises a processor 116 and a memory 115 for storing data and computer program 117. The first device 110 may further comprise user I/O (input/output) components 118 that may be arranged, possibly together with the processor 116 and a portion of the computer program 117, to provide a user interface for receiving input from a user and/or providing output to the user. The processor 116 may be arranged to control operation of the first device 110 e.g. in accordance with the computer program 117 stored in the memory 115, in accordance with the user input received via the user I/O components 118 and/or in accordance with information received via the wireless communication portion 112. The memory 115 and the computer program 117 stored therein may be further arranged to, with the processor 116, to control operation of the wireless communication portion 112, possibly together with a control portion that may be provided within the wireless communication portion 112 (which will be described later in this text). The first device 110 may comprise further components or portions in addition to those depicted in Figure 2a.

The second device 130 may be a mobile device or a fixed device. Figure 2b schematically illustrates some components of an exemplifying second device 130. The second device 130 comprises a wireless communication portion 132 similar to the wireless communication portion 112, thereby enabling the short-range wireless communication with the first device 110. Along the lines described for the wireless communication portion 112, the wireless communication portion 132 may be considered as a wireless communication apparatus included in (or hosted by) the second device 130.

The second device 130 further comprises a processor 136 and a memory 135 for storing data and computer program 137. The second device 130 may further comprise user I/O (input/output) components 138 that may be arranged, together with the processor 136 and a portion of the computer program 137, to provide a user interface for receiving input from a user and/or providing output to the user. The processor 136 may be arranged to control operation of the second device 130 in accordance with the computer program 137 stored in the memory 135 and possibly further in accordance with the user input received via the user I/O components and/or in accordance with information received via the wireless communication portion 132. The memory 135 and the computer program 137 stored therein may be further arranged to, with the processor 136, to control operation of the wireless communication portion 132, possibly together with a control portion that may be provided within the respective communication portion 132, 134 (which will be described later in this text). The second device 130 may comprise further components or portions in addition to those depicted in Figure 2b.

Each of the wireless communication portions 112, 132 may be provided e.g. as a respective chipset and/or as a respective communication module. For clarity and brevity of description, each of the wireless communication portions 112, 132 is described as a single logical portion that may also be capable of processing at least some of the information received via the wireless connection and/or at least some of the information that is to be transmitted via the wireless connection without external control from other components of the respective device 110, 130 (e.g. from the processor 116, 136). In an embodiment, each of the wireless communication portions 112, 132 may comprise e.g. a wireless transceiver portion for wireless communication and a control portion for controlling operation of the wireless transceiver portion and for processing information received/transmitted via the wireless transceiver portion. Such a control portion may be provided by hardware means, by software means or by combination of hardware means and software means. As an example in this regard, the wireless communication portion 112, 132 may comprise a memory and a processor, and the control portion may be provided by a computer program code stored in the memory, which computer program code is arranged to, with the processor, to control at least part of the operation of the wireless communication portion 112, 132.

The wireless connection between the wireless communication portions 112 and 132 may be provided by a suitable short-range wireless communication technique or protocol. The term short-range wireless communication as used herein refers to a wireless communication technique or protocol that enables typical operational range in the scale of tens of meters, e.g. up to 100 meters. However, especially in an indoor environment, the operational range of such short-range wireless communication technique/protocol may be somewhat shorter e.g. due to walls and other fixed structures as well as furniture etc. that are likely to partially block or interfere with the radio communication between the wireless communication portions 112 and 132. On the other hand, in favorable conditions in outdoor use the operational range may extend to several hundreds of meters. Examples of such wireless techniques/protocols include Bluetooth (BT) technology, e.g. BT Basic Rate / Enhanced Data Rate (BR/EDR) and BT Low Energy (BLE) protocols. Further examples include for example ZigBee (IEEE 802.15.4) and Z-Wave protocols.

While a number of short-range wireless communication techniques/protocols known in the art are applicable in the framework of the communication arrangement 100, in the following some aspects of various embodiments of the present invention are described with references to the BLE protocol. However, the BLE serves as an illustrative and non-limiting example in this regard, and the description generalizes into any wireless communication protocol where the first device 110 and the second device 130 are capable of establishing a wireless point-to-point connection therebetween on basis of the first device 110 advertising its presence to the second device 130, as will be described in the following in more detail.

BLE operates in the unlicensed 2.4 GHz ISM band, in the same manner as the BR/EDR variant of the Bluetooth protocol suite. BLE supports data packets from 10 octets to a maximum of 47 octets, thereby providing a low duty cycle. BLE employs a frequency hopping transceiver with many frequency hopping spread spectrum (FHSS) carriers, with a gross air data rate of 1 Megabit per second (Mb/s).

BLE is designed for applications that do not require high data rates and/or low latency, but which may benefit from a very-low power idle mode, from a simple device discovery, and from usage of short data packets. BLE protocol allows a star network topology in connections, where one device may serve as a master for a plurality of slave devices. The master device dictates the connection timing and communication operations of the one or more slave devices. BLE communicates over a total of 40 RF channels, separated by 2 MHz. Data communication between BLE devices occurs in 37 pre-specified data channels of the 40 RF channels. Data connection transmissions occur in connection events wherein a point-to-point connection is established between the master device and a slave device. However, it is also possible to transmit data in BLE advertising events (as will be described in the following). In the BLE protocol, a slave device may provide data through BLE communication to the master device to which it is connected and vice versa. The remaining 3 channels of the 40 RF channels are advertising channels used by devices to advertise their existence and capabilities. The BLE protocol defines a unidirectional connectionless broadcast mode on the advertising channels. A TDMA based polling scheme is used in which one device transmits a packet at a predetermined time and, when connected, a corresponding device responds with a packet after a predetermined interval.

The physical channel is sub-divided into time units known as events. Data is transmitted between BLE devices in packets that are positioned in these events. There are two types of events: Advertising events and Connection events. Devices that transmit advertising packets on the advertising Physical Layer (PHY) channels are referred to as advertisers or advertising devices. Devices that receive advertising on the advertising channels without immediate intention to connect to the advertising device are referred to as scanners or scanning devices. Devices that form a connection to another device by listening for connectable advertising packets are referred to as initiators or initiator devices. Transmissions on the advertising PHY channels occur in advertising events. At the start of each advertising event, the advertiser sends an advertising packet corresponding to an advertising event type.

The initiator device that receives the advertising packet, may make a connect request (CONNECT_REQ) to the advertising device on the same advertising PHY channel. The advertising device accepting the CONNECT_REQ request results in establishing a point-to-point connection between the initiator device and the advertising device. The initiator device becomes a master device while the advertising device that becomes a slave device in a piconet. The master device and the slave device know at what time and in which frequency the connection is in operation. The data channel changes between every connection event and the start of connection events are spaced regularly with the connection interval that is provided in the CONNECT_REQ packet and that may be updated using a LL_CONNECTION_UPDATE_REQ packet.

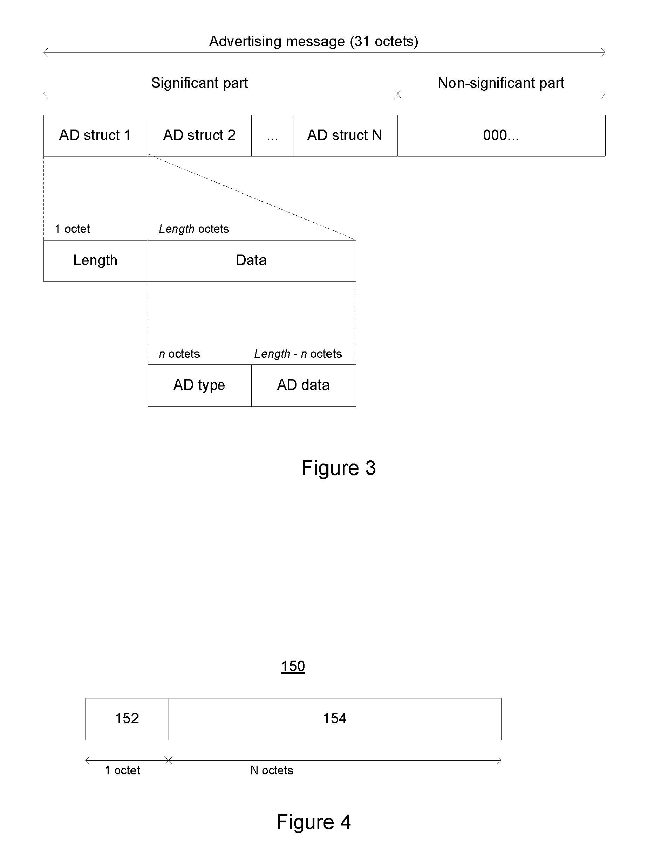

Figure 3 illustrates example structure applied for advertising messages and scan response messages in the BLE protocol. The message comprises a significant part carrying the data and it may comprise all-zero the non-significant part if padding of the message size to 31 octets is needed. Only the significant part needs to be sent over the radio link. The significant part comprises a sequence of advertising data (AD) structures (represented by AD struct 1, AD struct 2 and struct N in Figure 3). Each AD structure contains the length value *L* (one octet) followed by the data octets (*L* octets). The data octets include the AD type field (*n* octets, depending on the AD type) followed by the AD data octets (*L* - *n* octets). Advertising messages according to the example of Figure 3 may be transmitted in a BLE advertising event. Advertising data may be carried in the AdvData field of an ADV_IND packet, an ADV_NONCONN_IND packet or an ADV_SCAN_IND packet. Scan response data may be carried in the ScanRspData field of a SCAN_RSP packet. More detailed description of the advertising messages and scan response messages with the framework of BLE is provided e.g. in the Bluetooth Specification Version 4.0, Specification Volume 3 - Core System Package [Host volume] Part C, Section 11 (publication date 30 June 2010).

In the context of the communication arrangement 100, we may assume, for illustrative purposes, that the first device 110 typically comprises a mobile user device second device 130 typically comprises an accessory device that is connectable to a single first device 110. Non-limiting examples of such first device include a mobile phone, a smartphone, a portable music player, a portable media player, a mobile gaming device, a tablet computer, a laptop computer, etc. Non-limiting examples of the second device 130 include headphones, a microphone or a microphone unit, a headset, a loudspeaker system, wireless watches, sport sensors such as heart rate sensors or pedometers, wirelessly controllable toys, etc. However, the second device 130 may, alternatively, comprise another user device, e.g. one of the types listed above as examples for the first device 110.

In the context of the communication arrangement 100, a second device 130, e.g. the second device 130-1, may wish to establish connection and/or pairing with one of the first devices 110. In a scenario where there are multiple first devices 100 within the operating range of the second device 130-1, there is potential confusion for the second device 130-1 regarding which first device 110 to connect to and/or pair with. Similarly, in a scenario where there are multiple second devices 130 within the operating range of a given first device 110, there may be some confusion regarding which of the second devices 130 should connect the given first device 110. In the following, techniques for connection and/or paring establishment between one first device 100 and one second device 130 are described in an exemplifying and non-limiting manner.

As an overview regarding processing carried out by entities of the communication arrangement 100 and regarding information exchange between entities of the communication arrangement 100, for example the following steps (not necessarily listed in order of their occurrence) may be carried out in order to facilitate establishing a connection and/or pairing between one of the first devices 110 and one of the second devices 130 in an automated or semi-automated manner:
i) the second device 130-1 operating a state where it has not been paired with any of other device of a predetermined type (e.g. the type of the first devices 110);
ii) the second device 130-1 scanning for other devices;
iii) the first device 110-1 advertising its presence and type by transmitting one or more advertising messages that comprise an identifier indicative of the type of the first device 110-1;
iv) the second device 130-1 receiving the advertising message(s) originating from the first device 110-1;
v) in response to the advertising message(s) received from the first device indicating the type of the first device 110-1 to be the predetermined type, the second device 130-1 evaluating the strength of the radio connection between itself and the first device 110-1 on basis of the received advertising message(s);
vi) in response to the strength of the radio connection found sufficiently high, the second device 130-1 selecting the first device 110-1 as a candidate for connection establishment and/or pairing;
vii) the second device 130-1 advertising its presence to the other second devices 130-2, 130-3 by transmitting one or more advertising messages, which advertising events comprise an identification of the first device 110-1 and an indication of the strength of the radio connection between the second device 130-1 and the first device 110-1.

The conceptual steps of the outline described above may be varied in a number of ways. As an example in this regard,
- in (or substantially concurrently with) step iv) the second device 130-1 further receives one or more advertising messages from at least one further second device 130-2, 130-3, which advertising message(s) comprise an identification of the first device 110-1 and an indication of the strength of the radio connection between the respective second device 130-2, 130-3 and the first device 110-1 (as described for the second device 130-1 above in step vii));
- in step vi) the second device 130-1 compares the strength of the radio connection between at least one further second device 130-2, 130-3 and the first device 110-1 and the strength of the radio connection between itself and the first device 110-1 and proceeds with the connection and/or pairing establishment in case the strength of the radio connection between the second device 130-1 and the first device 110-1 exceeds that between any of the further second devices 130-2, 130-3 and the first device 110-1 by at least a predetermined margin.

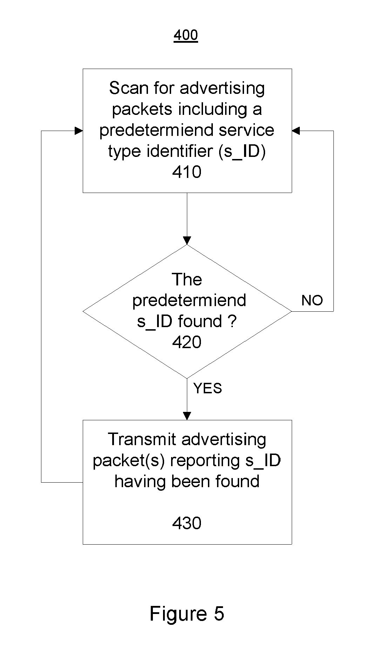

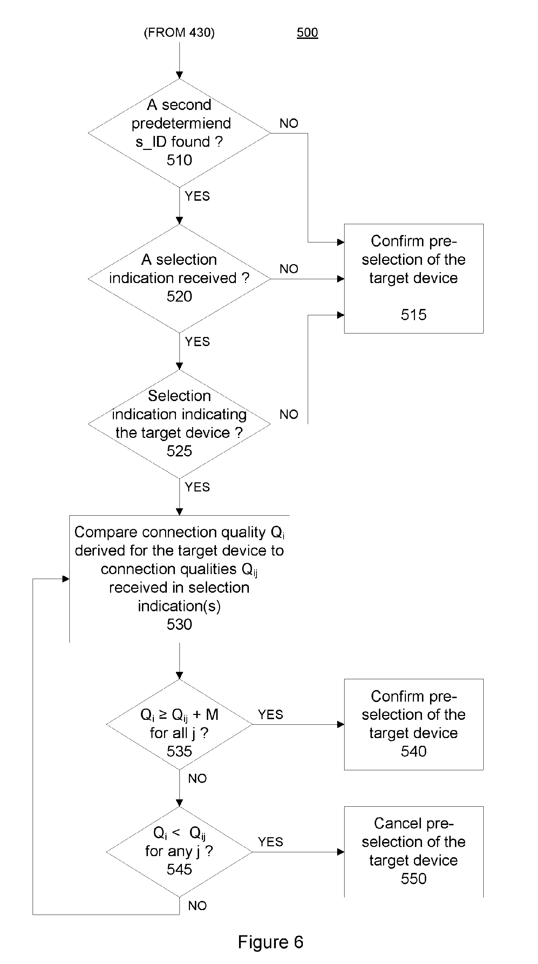

In the following, some of the conceptual steps of the automated or semi-automated connection establishment according to the outline described above are described in more detail in an exemplifying and non-limiting manner with references to flowcharts illustrated in Figures 5 and 6 describing methods 400 and 500, respectively, in accordance with respective example embodiments.

The first devices 100 and the second devices 130 may be each configured to transmit (e.g. broadcast), via respective wireless communication portions 112, 132, advertising messages to indicate their presence to other devices. The advertising messages carry information regarding characteristics and operational state of (the wireless communication portion 112, 132) the device 110, 130 transmitting the advertising messages. The information received in an advertising message may be applied in the device 110, 130 having received the advertising message, for example, to determine whether they wish to establish a connection and/or pairing with the device 110, 130 having transmitted the advertising message and, possibly, to establish the connection and/or pairing with the device 110, 130 having transmitted the advertising message.

Although the term advertising message is used herein, it serves as a non-limiting example of a mechanism for providing information about the presence, characteristics and operational state of (the wireless communication portion 112, 132) the device 110, 130 and events, messages or packets of other type may be applied instead to provide this or corresponding information.

An advertising message transmitted from the first device 110 or from the second device 130 comprises an identification of the respective device 110, 130, e.g. a media access control (MAC) address or other address or identifier assigned to the respective device 110, 130 and/or to the wireless communication portion 112, 132 thereof.

Moreover, at least some of the advertising messages transmitted from the first device 110 and the second device 130 comprise an indication of the service represented by the respective device 110, 130. Such an indication may be referred to as a service type indication s_ID. Herein, the service type indicates the type of role of the respective device 110, 130 in the framework of the communication arrangement 100. The service type indication s_ID may be provided in an advertising packet or an advertising element. The advertising packet/element, in turn, may be included in one or more advertising messages transmitted from the device 110, 130 via the wireless communication portion 112, 132.

Various approaches may be applied in transmitting the service type information between the first device 110 and the second device 130. Figure 4 depicts an exemplifying advertising packet 150, which is used in the following as a non-limiting example of transmitting the service type information between the first device 110 and the second device 130. The advertising packet 150 comprises a first information element 152 that carries a data type indication d_ID and a second information element 154 that carries the service type indication s_ID. The size of the first information element 152 may be e.g. one octet (eight bits) whereas the size of the second information element 154 may depend on the data type indicated in the first information element 152. As an example, the data type indication d_ID=0x07 may be used to indicate that the second information element 154 carries a 128-bit (i.e. 16-octet) universally unique identifier (UUID), and the service type indication s_ID may be set to a predetermined value assigned for the service type represented by the device 110, 130 transmitting the advertising packet 150 in the advertising event. As another example, the data type indication may be set to d_ID=0xFF to indicate that the second information element carries manufacturer specific data.

As an example for carrying the advertising packet 150 over a wireless link, in case the BLE protocol is applied, the advertising packet 150 may be included as an AD structure in an advertising packet transmitted in an advertising event such that the AD type field carries the first information element 152 and the AD data octets carry the second information element 154 (see Figure 3).

For the purpose of illustration, we may assume that the first devices 110 represent devices of a first predetermined service type and that the second devices 130 represent devices of a second predetermined service type. Moreover, we may further assume that the first devices 110 may indicate their role as devices of the first predetermined service type by including in at least some of the advertising packets transmitted therefrom the service type indication s_ID set to a predefined UUID value UUIDm (i.e. s_ID=UUIDm). Similarly, the second devices 130 may indicate their role as devices of the second predetermined service type by including in at least some of the advertising packets transmitted therefrom the service type indication s_ID set to a predefined UUID value UUIDh (i.e. s_ID=UUIDh).

In the first device 110 side, a starting point for a device selection for the automated or semi-automated connection establishment is the first device 110-i advertising its presence by transmitting advertising packets that indicate the first device 110-i to represent the first predetermined service type, e.g. by including the service type indicator s_ID=UUDIm in at least some of the advertising packets. In the second device 130 side, a starting point for the automated or semi-automated device selection for connection and/or pairing establishment is the second device 130-i operating in a state in which it wishes to establish a connection and/or pairing with a device representing the first predetermined service type using the wireless communication portion 132. Such state of operation of the second device 130-i may occur e.g. upon first time activation of the second device 130-i, upon first activation of the second device 130-i after reset or initialization of the second device 130-i or, in general, any time the second device 130-i is operated in a state in which it would be desirable to establish connection with a device representing the first predetermined service type. In this state of operation, the second device 130-i may advertise its presence by transmitting advertising packets that indicate the second device 130-i to represent the second predetermined service type, e.g. by including the device indicator s_ID=UUIDh in at least some of the advertising packets.

Herein, the term pairing refers to a procedure for linking the second device 130-1 with a certain device of the first predetermined service type to allow subsequent automated or semi-automated communication establishment therebetween. During and/or as a result of the pairing process, the second device 130-1 obtains and stores information regarding the device with which the pairing is to be established and vice versa. This information may comprise e.g. the identification (e.g. MAC address or other address or identifier) of the device with which the pairing is to be established and shared secret such as link keys used to encrypt/decrypt information. Once the pairing is established, the information obtained/stored in the course of the pairing process may be applied to facilitate a subsequent connection establishment between the paired devices in an automated or semi-automated manner.

In the above-mentioned state of operation, the wireless communication portion 132 in the second device 130-i is configured to scan for advertising packets transmitted from other devices, as indicated in block 410 of Figure 4. The scanning may comprise scanning for advertising packets associated with the first predetermined service type. The second device 130-i (e.g. the wireless communication portion 132 thereof) may be further configured to determine, in response to receiving an advertising packet, whether the advertising packet originates from one of the first devices 110, i.e. from a device representing the first predetermined service type, as indicated in block 420. The determination may comprise determining whether the received advertising packet comprises a service type indication s_ID that indicates the first predetermined service type (e.g. s_ID=UUIDm).

The second device 130-i may be further configured to measure and/or to compute, in response to having detected advertising packet(s) from one or more first devices 110-i, respective connection quality indicator(s) *Qᵢ*. A connection quality indicator *Qᵢ* is descriptive of the strength of the radio connection between the second device 130-i (e.g. the wireless communication portion 132) and the source of the received advertising packet(s), i.e. the first device 100-i (e.g. the wireless communication portion 112) having transmitted the advertising packet(s). The measurement/computation process may include deriving a received signal strength indication (RSSI) on basis of one or more advertising packets received from the respective first device 110-i. In this regard, we may denote a RSSI value, which serves an indication of the received signal strength in the advertising packet(s) originating from the first device 110-l, by *Rᵢ.* The RSSI value *Rᵢ* may be derived, for example, as the RSSI of a single received advertising packet, as an average of the RSSIs of a plurality of received advertising packets or as a minimum or maximum of the RSSIs of a plurality of received advertising packets originating from the respective first device 110-i.

Consequently, the connection quality indicator *Qᵢ* may be derived on basis of the RSSI value and/or on basis of another value descriptive of the received signal strength. As an example, the connection quality indicator *Qᵢ* may be derived directly as the RSSI value *Rᵢ* (e.g. *Qᵢ* = *Rᵢ*). Consequently, higher value of *Qᵢ* implies higher strength of the radio connection -and typically higher value of *Qᵢ* also implies shorter distance between the second device 130-1 and the respective first device 110-i.

The second device 130-i may be further configured to select one of the first devices 110-i found to represent the first predetermined service type as a target device, serving as a candidate for connection and/or pairing establishment. In case only one such first device 110-i is detected, the selection concerns whether the detected first device 110-i is eligible to serve as the target device. In case the two or more such first devices 110-i are detected, the selection may include identifying the most suitable candidate among the detected first devices 110-i and verifying whether the identified candidate is eligible to serve as the target device. Consequently, the selection procedure results in selecting at most one of the first devices 110-i found to represent the first predetermined service type as the target device. Examples of the selection procedure will be described later in this text.

The second device 130-i may be further configured to use the wireless communication portion 132 to transmit (e.g. broadcast), in response to having detected one or more first devices 110-i, an indication in this regard. Such indication may be included in one or more advertising packets transmitted from the second device 130-i, as indicated in block 430.

In this regard, the second device 130-i may be configured to transmit, in response to having selected one of the first devices 110-i as the target device, one or more advertising packets that comprise an indication in this regard. As a non-limiting example, such indication may be provided e.g. as a selection indication included in at least some of the advertising packets transmitted from the second device 130-i. The selection indication serves as an explicit indication for the other second devices 130 regarding a device of the first predetermined service type having been detected and selected as the target device by the second device 130-i. The selection indication comprises at least the identification of the target device and the selection indication may further comprise the value of the connection quality indicator *Qᵢ* derived for the target device in the second device 130-i. In the following, the advertising packets including the selection indication may be referred to as reporting messages or reporting advertising messages.

Alternatively or additionally, instead of only reporting findings related to the first device 110-i that is (possibly) selected as the target device, the second device 130-i may be configured to report findings pertaining to one or more (other) detected first devices 110-i. This may involve reporting all detected first devices 110-i or reporting those detected first devices 110-i that fulfil the criteria for serving as the target device.

As a non-limiting example, such indication may be provided e.g. as one or more detection indications included in at least some of the advertising packets transmitted from the second device 130-i. The detection indication serves as an explicit indication for the other second devices 130 regarding a device of the first predetermined service type having been detected but not necessarily selected as the target device by the second device 130-i. The detection indication comprises at least the identification of the respective detected first device 110-i and the detection indication may further comprise the value of the connection quality indicator *Qᵢ* derived for the respective detected first device 110-i in the second device 130-i. The detection indication may apply the same format as the selection indication.

The selection indication or the detection indication may be carried as a respective dedicated information element of the reporting message. As another example, the selection indication or the detection indication may be embedded in the service type indication s_ID, e.g. such that selection indication or the detection indication replaces predefined one or more parts of the service type indication s_ID.

As an example in this regard, assuming that the 128-bit UUID is applied as the service indicator (e.g. d_ID=0x07), that the service indicator UUIDm applied to indicate the first predetermined service type is assigned the value UUIDm = b7cd3520-7d0e-11e3-baa7-0800200c9a66 and that the identification of the target device is represented by the symbol "aabbccddeeff", a modified UUID including the identification of the target device may be provided as UUIDh = b7cd3520-7d0e-11e3-baa7-aabbccddeeff, in other words the modified UUID denoted as UUIDh serves as the service type indicator value that indicates the second predetermined service type while it also carries the identification of the target device. Even though the identification of the target device replaces a first predefined part of the UUIDm, in context of the communication arrangement 100 the remaining part of UUIDh serves as a sufficient identification of the service type.

As another example, as a continuation of the previous example, modification of the UUID may be applied to further carry an indication of the value of the connection quality indicator *Qᵢ* derived for the target device in the second device 130-i. As an example in this regard, the RSSI value *Rᵢ* serving as the connection quality indicator *Qᵢ* may replace the second predefined part (that does not overlap with the first part) of the UUIDm. Assuming the symbol "rssi" to represent the RSSI value *Rᵢ*, the (further) modified UUID may be provided as UUIDh' = b7cd3520-7d0e-11e3-rssi-aabbccddeeff.

As a further example, assuming that manufacturer specific data is applied as the service indicator (e.g. d_ID=0xFF), that the service indicator UUIDm' applied to indicate the first predetermined service type is assigned the value UUIDm' = 0001-b7, that the identification of the target device is represented by the symbol "aabbccddeeff' and that the symbol "rssi" represents the RSSI value *Rᵢ*, the modified UUID may be provided as UUIDh" = 0001-b8-rssi-aabbccddeeff.

In the following, an exemplifying selection process for identifying or pre-selecting the target device among the detected first devices 110-i is described. In case only a single first device 110-i has been detected, this first device 110-i is pre-selected as the target device. In case two or more first devices 110-i have been detected, e.g. one of the exemplifying pre-selection procedures described in the following may be applied.

As an example, the pre-selection procedure may comprise pre-selecting the first device 110-i for which the connection quality measure *Qᵢ* indicates the highest strength of radio connection among the detected first devices 110-i. As another example, assuming the connection quality indicator *Q₁* indicating the strength of radio connection with the first device 110-1 and the connection quality indicator Q₂ indicating the strength of radio connection with the first device 110-2, the preselection procedure may cause pre-selection of the first device 110-1 in response to *Q₁* exceeding *Q₂* by at least a predefined margin (e.g. *Q₁* ≥ *Q₂* + *M_{q}* or *Q₁* ≥ (1+ *m_{q}*) * *Q*₂) and causes pre-selection of the second device 110-2 in response to Q₂ exceeding *Q₁* by at least the predefined margin (e.g. *Q₂* ≥ *Q₁* + *M_{q}* or *Q₂* ≥ (1 + *m_{q}*) * *Q₁*). This pre-selection procedure generalizes into identifying and pre-selecting as the target device the first device 110-i for which the connection quality indicator *Qᵢ* exceeds that of any other first device 110-j (or the maximum *Qᵢ* found for the other first devices 110-j) by at least the predefined margin (e.g. *Qᵢ* ≥ *Qⱼ* + *M_{q}* or *Qᵢ* ≥ (1+ *m_{q}*) * *Qⱼ* for all *i ≠ j*).

In case the difference between *Qᵢ* and *Q₂* is smaller than the predefined margin (e.g. *M_{q}* or *m_{q}*), the pre-selection procedure may cause the second device 130-i to prompt, via a user interface of the second device 130-i, the user to move the second device 130-i and the first device 110 of interest closer to each other. The prompt may be provided e.g. as an audio prompt or as a visual indication via the user interface of the second device 130-i. The pre-selection procedure may be repeated e.g. until the difference in the values of the connection quality measures *Q₁* and *Q₂* exceeds the predefined margin and/or (at most) a predetermined number of times.

The second device 130-i may be configured to select or confirm the pre-selected target device as an actual target device without further verification. Alternatively, selecting or confirming the pre-selected target device as the actual target device may be conditional in dependence of the connection quality indicator *Qᵢ* derived for the pre-selected target device. In this regard, the pre-selected target device may be selected or confirmed as the actual target device in response the connection quality indicator *Qᵢ* derived for the pre-selected target device indicating radio connection strength that exceeds a predefined quality threshold, e.g. the RSSI value *Rᵢ* exceeding a predefined threshold *Th*_{A} (e.g. when *Rᵢ* > *Th_{A}*). In contrast, the second device 130-i may be configured to refrain from selecting or confirming the pre-selected target device as the actual target device in response the connection quality indicator *Qᵢ* indicating radio connection strength failing the meet the quality threshold, e.g. the RSSI value *Rᵢ* failing to exceed the threshold *Th*_{A} (e.g. when *Rᵢ* ≤ *Th*_{A}). This corresponds to selecting or confirming the pre-selected target device as the actual target device provided that it is within a short enough distance from the second device 130-i for the purpose(s) of establishing connection thereto and/or pairing therewith. Depending on the applied criteria (e.g. the threshold *Th*_{A}), such 'short enough distance' may be considered, for example, to represent a 'touching range', in other words a range where the first device 110-i and the second device 130-i are in or close to being in physical touch with each other.

Having pre-selected one of the detected first devices 110-i as the target device, the second device 130-i may continue scanning in order to detect one or more further second devices 130, e.g. in order to detect one or more advertising packets associated with the second predetermined service type. In this regard, while scanning for the advertising packets from other devices the second device 130-i may be configured to determine, in response to receiving an advertising packet, whether the received advertising packet originates from another second device 130, in other words from a device representing the second predetermined service type. The determination may comprise determining whether the received advertising packet comprises a service type indication s_ID that indicates the second predetermined service type (e.g. s_ID=UUIDh, s_ID=UUIDh' or s_ID=UUIDh"). In particular, the determination may comprise determining whether the received advertising packet comprises a selection indication, described in the foregoing, originating from a further second device 130.

In case of a failure to detect a further second device 130 (block 510 of Figure 6) or in case of a failure to receive a selection indication from a detected further second device 130 (block 520) e.g. within a predefined time window after having selected one of the first devices 110-i as the (actual) target device, the second device 130-i may confirm the selection of the target device and, for example, to proceed with the connection establishment and/or pairing establishment with the first device 110-i selected as the (actual) target device, as indicated in blocks 515.

In case of detecting at least one further second device 130 and receiving a selection indication from at least one these second devices 130, the second device 130-i may proceed with the evaluation in dependence of information received in the selection indications originating from the other second devices 130.

In case of each of the selection indications received from further second devices 130 identify a target device different from that selected by the second device 130-i (block 525), the second device 130-i may ignore the received selection indications for the purposes of the connection and/or pairing establishment with the target device. Consequently, the second device 130-i may confirm its own selection of the target device (block 515) and, for example, proceed with the connection establishment and/or pairing establishment with the first device 110-i selected as the (actual) target device without further verifications in this regard.

In case one or more of the selection indications received from the further second devices 130 identify the same target device as selected by the second device 130-i, a post-selection process may be invoked in order to confirm or cancel the selection of the target device by the second device 130-i. The post-selection process may comprise reconsideration of the target device selection in the second device 130-i on basis of comparison of the connection quality indicator *Qᵢ* derived for the target device in the second device 130-i and the connection quality indicator(s) *Q_{i,j}* received in the selection indications originating from the further second devices 130 (where the subscript *j* denotes the further second device 130-j from which the respective selection indication has been received), as indicated in block 530.

The post-selection process may be arranged to cause the second device 130-i confirming the selection of the target device in response to the value of the connection quality indicator *Qᵢ* exceeding that of any of the connection quality indicators *Q_{i,j}* by at least a predefined margin, e.g. *Qᵢ* ≥ *Q_{i,j}* + *M'_{q}* or *Qᵢ* ≥ (1+ *m'_{q}*) * *Q_{i,j}* for all *j*, as indicated in blocks 535 and 540. Conversely, the post selection process may be arranged to cause the second device 130-i canceling the selection of the target device in response to the value of any of the connection quality indicator *Q_{i,j}* exceeding that of the connection quality indicator *Qᵢ*, e.g. *Qᵢ* < *Q_{i,j}* for any *j*, as indicated in blocks 545 and 550.

The post-selection process may be arranged to cause the second device 130-i to prompt, via the user interface of the second device 130-i, the user to move the second device 130-i and the first device 110 of interest closer to each other in response to the value of the connection quality indicator *Qᵢ* exceeding the largest value among the connection quality indicators *Q_{i,j}* by less than the predefined margin, e.g. *Qᵢ* ≥ max(*Q_{i,j}*) and (*Qᵢ* ≤ max(*Q_{i,j}*) + *M'_{q}* or *Qᵢ* ≤ (1+ *m'_{q}*) * max(*Q_{i,j}*). As described in the foregoing, such prompt may be provided e.g. as an audio prompt or as a visual indication via the user interface of the second device 130-i. After a suitable waiting period the processing continues from (re-)comparison of the connection quality indicator *Qᵢ* against the connection quality indicator(s) *Q_{i,j}* (block 530). This aspect of the post-selection procedure may be repeated e.g. until a condition for confirming or cancelling the selection of the target device is satisfied and/or (at most) a predetermined number of times.

If the post-selection procedure results in confirming the selection of the target device, the second device 130-i may proceed with the connection establishment and/or pairing establishment with the first device 110-i selected as the target device. In case the post-selection procedure results in cancelling the selection of the target device, the second device 130-i refrains from proceeding with the connection establishment and/or pairing establishment.

Referring back to Figures 2a and 2b, the processor 116 is configured to read from and write to the memory 115 and the processor 136 is configured to read from and write to the memory 135. Although the processor 116, 136 is depicted as a single component, the processor 116, 136 may be implemented as one or more separate components. Similarly, although the memory 115, 135 is illustrated as a single component, the memory 115, 135 may be implemented as one or more separate components, some or all of which may be integrated/removable and/or may provide permanent / semi-permanent/ dynamic/cached storage.

The memory 115 may store the computer program 117 comprising computer-executable instructions that control the operation of the first device 110 when loaded into the processor 116. As an example, the computer program 117 may include one or more sequences of one or more instructions. The computer program 117 may be provided as a computer program code. The processor 116 is able to load and execute the computer program 117 by reading the one or more sequences of one or more instructions included therein from the memory 115. The one or more sequences of one or more instructions may be configured to, when executed by the processor 116, cause the first device 110 to carry out operations, procedures and/or functions described in the foregoing. Hence, the first device 110 may comprise at least one processor 116 and at least one memory 115 including computer program code for one or more programs, the at least one memory 115 and the computer program code configured to, with the at least one processor 116, cause the first device 110 to perform operations, procedures and/or functions described in the foregoing.

The memory 135 may store a computer program 137 comprising computer-executable instructions that control the operation of the second device 130 when loaded into the processor 136. As an example, the computer program 137 may include one or more sequences of one or more instructions. The computer program 137 may be provided as a computer program code. The processor 136 is able to load and execute the computer program 137 by reading the one or more sequences of one or more instructions included therein from the memory 135. The one or more sequences of one or more instructions may be configured to, when executed by the processor 136, cause the second device 130 to carry out operations, procedures and/or functions described in the foregoing. Hence, the second device 130 may comprise at least one processor 136 and at least one memory 135 including computer program code for one or more programs, the at least one memory 135 and the computer program code configured to, with the at least one processor 136, cause the second device130 to perform operations, procedures and/or functions described in the foregoing.

The computer program 117 may be provided e.g. as a computer program product comprising at least one computer-readable non-transitory medium having program code stored thereon, the program code, when executed by the first device 110, causing the first device 110 at least to perform operations, procedures and/or functions described in the foregoing. The computer program 137 may be provided e.g. as a computer program product comprising at least one computer-readable non-transitory medium having program code stored thereon, the program code, when executed by the second device 130, causing the second device 130 at least to perform operations, procedures and/or functions described in the foregoing.

The computer-readable non-transitory medium may comprise a memory device or a record medium such as a CD-ROM, a DVD, a Blu-ray disc or another article of manufacture that tangibly embodies the computer program. As another example, the computer program may be provided as a signal configured to reliably transfer the computer program.

Reference(s) to a processor should not be understood to encompass only programmable processors, but also dedicated circuits such as field-programmable gate arrays (FPGA), application specific circuits (ASIC), signal processors, etc. Features described in the preceding description may be used in combinations other than the combinations explicitly described. Although functions have been described with reference to certain features, those functions may be performable by other features whether described or not. Although features have been described with reference to certain embodiments, those features may also be present in other embodiments whether described or not.

## Claims

1. A wireless communication apparatus comprising at least one processor and at least one memory including computer program code for one or more programs, the at least one memory and the computer program code configured to, with the at least one processor, cause the wireless communication apparatus at least to:
scan a wireless communication channel for messages associated with a first predetermined service type,
in response to detecting one or more messages associated with said first predetermined service type,
derive, for each source of one or more such messages, a quality indication descriptive of the strength of a radio connection between the wireless communication apparatus and the respective source, and
select at most one of said sources as a target device on basis of said quality indications, and
in response to selecting the target device, transmit, via said wireless communication channel, one or more messages identifying the wireless communication apparatus to represent a second predetermined service type and comprising a first selection indication including an identification of and the quality indication derived for the target device to identify the target device for other wireless apparatuses representing the second predetermined service type.

2. A wireless communication apparatus according to claim 1, caused to select the source for which the quality indication of highest value has been derived as the target device.

3. A wireless communication apparatus according to claim 1, caused to pre-select the source for which the quality indication of highest value has been derived, and
select said pre-selected source as the target device in response to one or both of the following:
the quality indication for said pre-selected source exceeding the quality indication for any other of said sources by at least a predefined margin,
the quality indication for said pre-selected source exceeding a predefined threshold.

4. A wireless communication apparatus according to any of claims 1 to 3, caused to
scan said wireless communication channel for messages associated with said second predetermined service type,
detect one or more messages associated with said second predetermined service type that comprise a second selection indication including,
an identification of a target device selected by a second device representing the second predetermined service type, and
a quality indication descriptive of the strength of a radio connection between said second device and the target device selected by said second device,
in response to detecting the target device selected by the wireless communication apparatus to be the same as the target device selected by said second device, one of confirm and adjust selection of the target device in the wireless communication apparatus on basis of comparison of the quality indication derived for the target device selected by the wireless communication apparatus and the quality indication received in the second selection indication.

5. A wireless communication apparatus according to claim 4, caused to confirm the selection of the target device in response to the quality indication derived for the target device selected by the wireless communication apparatus exceeding the quality indication received in the second selection indication by at least a second predefined margin.

6. A wireless communication apparatus according to claim 4 or 5, caused to cancel the selection in response to the quality indication received in said second selection indication exceeding the quality indication derived for the target device selected by the wireless communication apparatus.

7. A wireless communication apparatus according to any of claims 4 to 6, caused to prompt a user of the wireless communication apparatus, via a user interface, to move the wireless apparatus closer to another wireless apparatus of interest in response to the quality indication derived for the target device selected by the wireless communication apparatus exceeding the quality indication received in the second selection indication by less than a second predefined margin.

8. A wireless communication apparatus according to any of claims 1 to 7, caused to, in response to having selected the target device, establish one or more of a wireless connection and pairing with the target device.

9. A wireless communication apparatus according to any of claims 1 to 8, wherein a service type is identified by a service type identifier included in respective messages, wherein said service type identifier comprises a predefined universally unique identifier, UUID, assigned to represent the respective service type.

10. A wireless communication apparatus according to any of claims 1 to 9,
wherein said first predetermined service type indicates a mobile computing device such as one of the following: a mobile phone, a smartphone, a media player, a music player, a tablet computer, a laptop computer, and
wherein said second predetermined service type indicates an accessory device such as one of the following: headphones, a headset, a loudspeaker system, a wireless watch, a heart rate sensor, a pedometer.

11. A wireless communication apparatus according to any of claims 1 to 10, wherein the wireless communication apparatus is caused to apply the Bluetooth Low Energy, BLE, protocol and wherein said messages are transmitted in advertising events of the BLE protocol.

12. A method comprising
scanning, in a first wireless communication apparatus, a wireless communication channel for messages associated with a first predetermined service type,
in response to detecting one or more messages associated with said first predetermined service type,
deriving, for each source of one or more such messages, a quality indication descriptive of the strength of a radio connection between the first wireless communication apparatus and the respective source, and
selecting at most one of said sources as a target device on basis of said quality indications, and
in response to selecting the target device, transmitting, via said wireless communication channel, one or more messages identifying the first wireless communication apparatus to represent a second predetermined service type and comprising a first selection indication including an identification of and the quality indication derived for the target device to identify the target device for other wireless apparatuses representing the second predetermined service type.

13. A method according to claim 12, further comprising scanning said wireless communication channel for messages associated with said second predetermined service type,
detecting one or more messages associated with said second predetermined service type that comprise a second selection indication including,
an identification of a target device selected by a second device representing the second predetermined service type, and
a quality indication descriptive of the strength of a radio connection between said second device and the target device selected by said second device,
in response to detecting the target device selected by the wireless communication apparatus to be the same as the target device selected by said second device, one of confirming and adjusting selection of the target device in the wireless communication apparatus on basis of comparison of the quality indication derived for the target device selected by the wireless communication apparatus and the quality indication received in the second selection indication.

14. A wireless communication apparatus according to claim 13, further comprising confirming the selection of the target device in response to the quality indication derived for the target device selected by the wireless communication apparatus exceeding the quality indication received in the second selection indication by at least a second predefined margin.

15. A computer program comprising computer readable program code configured to cause performing of the method of any of the claims 13 to 14 when said program is run on a computing apparatus.
